# EUROPEAN PATENT APPLICATION

(11) **EP 4 725 992 A1**
(43) Date of publication of application: **15.04.2026**
(21) Application number: 24206363.4
(22) Date of filing: 14.10.2024
(51) Int. Cl.: C08L 23/16

(54) **EPDM-BASED ELASTOMER COMPOSITIONS COMPRISING LIGNOCELLULOSIC POWDER AS BIO FILLER, AND PRODUCTS PREPARED THEREFROM**

(71) Applicant: ContiTech Techno-Chemie GmbH, 61184 Karben (DE)
(72) Inventor: Krisztian, Martin, 6900 Makó (HU)
(74) Representative: Bird & Bird LLP - Hamburg

(57) **Abstract**

The invention relates to an EPDM-based elastomer composition comprising:
- an EPDM elastomer, and
- a filler comprising lignocellulosic powder from agricultural waste, wherein the lignocellulosic powder is present in an amount of at least 1 phr.

The invention further relates to an EPDM elastomer product, obtained from the EPDM-based elastomer composition according to the invention.

## Description

### The field of the invention

The invention belongs to the technical field of elastomers used in the automotive industry. More specifically, the invention relates to EPDM-based elastomer compositions comprising lignocellulosic powder as biofiller, and products prepared therefrom.

### State of the art

In the automotive industry, plastics are widely used, including elastomers, which typically also contain fillers. Fillers may be inactive, i.e. they are essentially used to dilute the more expensive polymer phase; examples for such fillers are calcium carbonate (or chalk) and talc (these are also called as white fillers in the technical filed). Another group of fillers are named active or reinforcing fillers, i.e. they contribute to the physical properties of the rubber; examples for such fillers are different types of carbon black and silica (these are also called as black fillers in the field). Fillers may be relatively expensive and may have high impact on the environment (high CO2e emissions).

Cost and environmental aspects are increasingly important factors in the automotive industry, so there is a need for alternative, cheaper and more environmentally friendly fillers, with lower CO2e emissions, thereby lowering the overall CO2e emissions of the products comprising them.

Mastowski et al, in "Natural Rubber Composites Filled with Crop Residues as an Alternative to Vulcanizates with Common Fillers", Polymers 2019, 11, 972, described natural rubber (NR) composites filled with cereal straw, and characterized their properties. They found that straw is an alternative source of elastomer matrix additive in comparison with typical fillers used in rubber technology, i.e., silica, carbon black, chalk, and talc. The used straw particles had a varied shape and size; both nanometric particles and larger fibers with a size of a few micrometers were present according to the SEM images taken.

The same authors, Mastowski et al, in "The potential application of cereal straw as a bio-filler for elastomer composites", Polymer Bulletin 2020, 77:2021-2038, described elastomeric compositions with the addition of ground cereal straw as a lignocellulosic filler and characterized their functional properties. As elastomeric matrices, four types of rubbers (ethylene propylene, silicone, butadiene-styrene and butadiene-acrylonitrile) were used, differing in chemical structure and polarity, and thus in the use of cross-linking agents. The straw came from several species of cereals (rye, wheat, oat, triticale, barley and corn), and it was milled together to obtain a bio-filler in the form of a fine powder. No data are given about the size of the straw powder. They found that the use of lignocellulosic material as a rubber filler has increased the volume of the products obtained while maintaining performance comparable with unfilled vulcanizates or, as in the NBR/straw system, improved tensile and tear strength of finished materials.

In WO2015/054685A1 filler-natural rubber composites are described. The rubber composite comprises a) a rubber component selected from the group consisting of: a natural rubber component; and a synthetic rubber component; b) a crosslinking system; one or more accelerators; one or more activators; and a filler comprising vegetable waste, mineral waste, lignocellulosic waste, or a combination thereof. As lignocellulosic waste guayule bagasse; Taraxacum kok-saghyz floss; paper sludge; cardboard; straw; sawdust; and pine bark are listed. Straw is simply mentioned without any further details (e.g. origin, size). In the experimental examples, the use of tomato wastes, carbon fly ash, eggshells and bark from guayule plants is described.

CN106117827A relates to a waterproof coiled material of a rice straw-reinforced ethylene propylene diene monomer (EPDM)/POE, as a building waterproof material. The reinforcing effect obtained by rice straw was found to be better than with carbon black. The rice straw is not characterized, neither its preparation, nor its size is mentioned.

Although the use of straw as filler has already been suggested in connection with elastomers, in the elastomers currently used in the automotive industry, still mainly carbon black and chalk (calcium carbonate) are used; the use of bio-based fillers is very limited.

CN106751053A discloses a wear-resistant and long-service-life rubber material for a tire. The rubber material for the tire comprises, among others, butyl rubber, nitrile rubber, neoprene and modified wheat straw fiber. In the modified wheat straw fiber, the wheat straw fiber is sequentially treated with copper sulfate, hydrogen peroxide and high temperature (600-700°C), and has excellent antibacterial property and a dense carbon layer structure.

CN109265837A relates to the technical field of rubber pipes for vehicles, in particular to a high heat conduction and ageing resistant ethylene propylene diene monomer pipe for a vehicle. Said pipe is prepared from ethylene propylene diene monomer, polyolefin thermoplastic elastomer, sericite, biomass ceramic, polyacrylonitrile-based carbon fibers, zinc oxide, stearic acid, antiagers, a plasticizer, a titanate coupling agent and a vulcanizer. In the biomass ceramics, bamboo powder, sawdust, soybean straw powder or cotton straw powder is carbonized in a nitrogen oxygen-isolated environment to form a porous biochar structure.

It is emphasized that in the above-cited two documents, straw is used after mod ification/calcination.

Straw is a lignocellulosic biomass material, a by-product of agricultural crops production containing mainly: 25-50% of cellulose, 15-30% of hemicellulose and 10-30% of lignin, and the rest is mainly ash. The use of straw as filler in elastomers may entail the following disadvantages: lower durability, high moisture absorption and therefore increased swelling, lower strength, and lower processing temperature limiting the selection of polymer matrix. Such disadvantages and limitations may explain why straw cannot be regarded as an obvious, generally applicable alternative to conventional fillers, and why unmodified straw has practically not been used in elastomers in the field of automotive industry. In fact, finding a suitable filler for a defined elastomer compound, designed for a special purpose in the automotive industry, is usually a challenge, as the mechanical properties of the resulting product must meet strict specifications.

### Objectives of the invention

An objective of the present invention was to reduce CO2e emissions related to elastomers used in the automotive industry. More particularly, our objective was to reduce the harmful environmental effect caused by the filler in the elastomer composition.

A further objective was to make use of agricultural waste, namely straw.

It was an important requirement that the elastomer compositions of the invention should have similar mechanical properties as the corresponding compositions comprising conventional filler, in particular with respect to hardness, tensile strength, elongation at break, etc.

We have found that by compounding lignocellulosic powder from agricultural waste to EPDM compounds is not only possible, but yield similar results to the benchmark compound.

### Summary of the invention

The invention relates to an EPDM-based elastomer composition comprising:
- an EPDM elastomer, and
- a filler comprising lignocellulosic powder from agricultural waste, wherein the lignocellulosic powder is present in an amount of at least 1 phr.

The invention further relates to an EPDM elastomer product, obtained from the EPDM-based elastomer composition according to the invention.

### Definitions and abbreviations used in the description

The abbreviation CO2e means carbon dioxide equivalent or CO2 equivalent. It is a metric measure of the effect of different greenhouse gases (GHGs) on the climate. By converting different emissions to the equivalent amount of carbon dioxide (CO₂), their impacts can be compared. CO2e is expressed as tons CO2 per ton product (t/t).

The abbreviation phr means parts per hundred parts of rubber by weight. It is defined as parts by weight of ingredient per 100 parts of all raw rubber elastomer present in the mixture.

In the description, the terms "powder from lignocellulosic fiber", "lignocellulosic powder from agricultural waste", "lignocellulosic fiber powder" or simply "lignocellulosic powder" are used interchangeably, and refer to powders obtained from lignocellulosic agricultural wastes. The applicable lignocellulosic agricultural wastes include, for example cereal straw from wheat, rye, barley, oats or triticale, corn straw, rapeseed straw, rice straw, olive waste (e.g. stem, leaves), palm tree waste (leaflet, rachis and fibers), bamboo, etc.

In the context of the invention, the lignocellulosic powder is untreated, i.e. it is not modified by chemical or thermal treatment (e.g. calcination).

In the description, the term "moisture content" refers to the quantity of water contained in a material (specifically, in the lignocellulosic waste or lignocellulosic powder), and it is given on a mass basis, expressed as percentage (i.e.% by mass).

The abbreviation EPDM means ethylene propylene diene monomer, which is a type of synthetic rubber made from the chemicals stated in its name, i.e. from ethylene (ethene), propylene (propene), and a diene comonomer that enables crosslinking via vulcanization. EPDM is known for its excellent weather resistance, heat stability, and flexibility, and has a wide range of possible applications. In the automotive industry, it is often used in fluid media carriers (e.g. coolant hoses, flexible hoses for air conditioning circuits), gaskets, sealings, etc.

In the description, the terms "EPDM compounds" or "EPDM-based elastomer compositions" are used interchangeably, and refer to elastomer compositions, wherein the main raw elastomer (rubber) component is EPDM. The elastomer compositions usually include further ingredients, selected from e.g. fillers, curing (or vulcanizing) agents, plasticizers (e.g. oils or resins), processing additives, accelerators, antioxidants or colorants. The exact formulation can vary depending on the specific application and performance requirements of the final product.

### Detailed description of the invention

The invention relates to an EPDM-based elastomer composition comprising:
- an EPDM elastomer, and
- a filler comprising lignocellulosic powder from agricultural waste, wherein the lignocellulosic powder is present in an amount of at least 1 phr.

Although, from the viewpoint of reaching the desired mechanical properties, it would not be necessary to set a lower limit of the amount of the lignocellulosic fiber powder, in order to achieve a meaningful reduction in CO2e, it is desirable to use at least 1 phr, preferably 2 phr, 3 phr or 5 phr, even more preferably at least 10 phr of it. The upper limit in a specific rubber compound is determined by the maximum amount of the lignocellulosic fiber powder that still allows for achieving the desired mechanical characteristics for the given compound. Depending on the specific rubber compound and the specific application, we can use up to 30 phr, 50 phr, 80 phr or even 120 phr lignocellulosic fiber powder. Consequently, for different applications, the amount of lignocellulosic powder may range e.g. from 1 phr to 120 phr, from 2 phr to 100 phr, from 3 phr to 80 phr, from 5 phr to 50 phr, or from 10 phr to 30 phr.

In one embodiment, the lignocellulosic fiber powder has a particle size between 1 µm and 250 µm, preferably between 1 and 150 µm, more preferably between 1 and 100 µm.

The upper size limit of the particles may be controlled by using sieves, thereby removing undesired larger particles. The lower size limit is basically determined by the grinding process used. It should be noted that although smaller particles would be more advantageous in terms of the mechanical properties of the final product, since the invention aims to reduce CO2e, high energy-consuming processes that would result in particles below 1 µm are preferably avoided.

The applicable lignocellulosic agricultural wastes include, for example cereal straw, (e.g. from wheat, rye, barley, oats or triticale), corn straw, rapeseed straw, rice straw, olive waste (e.g. stem, leaves), palm tree waste (leaflet, rachis and fibers), bamboo, etc. The choice of the waste mainly depends on local possibilities and costs. In the examples we used wheat straw, which was cheaply available in large quantities.

Processing the agricultural waste includes drying and grinding.

Drying may involve e.g. field drying. Field drying refers to the process of allowing harvested straw (or other agricultural waste) to lose moisture naturally in the field. Further drying, e.g. artificial drying may also be applied, but high energy-consuming drying methods are preferably avoided. The moisture content must be reduced to around 10% or below to ensure effective processing and to prevent excessive microbial growth.

Grinding can be done e.g. with a two step milling, in a first step by using a knife mill, followed by ball milling, to ensure a fine particle size.

It is to be noted that handling the lignocellulosic powder during the elastomer preparation process is a challenge, as due to the fine particle size of the powder, it could easily get airborne during the process. In order to facilitate handling, the desired amount of straw can be pre-packaged in bags, and such bags can be used when mixing the ingredients. Another, more convenient approach involves using a carrier to be compounded into the elastomer. Said carrier could preferably be a fluid that also needs to be compounded into the elastomer, usually a type of oil (often used as plasticizer).

In one embodiment, the elastomer composition further comprises carbon black as filler. The amount of carbon black may range preferably from 20 phr to 150 phr, more preferably from 50 to 90 phr.

In a further embodiment, the elastomer composition comprises lignocellulosic powder in an amount of 5 to 50 phr and carbon black in an amount of 50 to 90 phr.

In an embodiment, the elastomer composition also includes curing additives and processing additives as well. The total amount of curing and processing additives may be between 3 and 30 phr, preferably between 10 and 25 phr.

The curing additive is preferably a peroxide. Processing additives may be used to enhance the overall workability of the material. Examples for processing additives are well known to the person skilled in the art.

In an embodiment, the elastomer composition also includes an oil. The oil basically acts as a plasticizer, but it also contributes to e.g. processability, and influences the properties of the end product. The amount of the oil may be between 10 and 80 phr, preferably between 30 and 50 phr.

Besides the above detailed components, further components usually applied in the field may be added to the EPDM composition of the invention.

For obtaining an EPDM compound of the invention, the ingredients of the composition are mixed in a manner well known for a person skilled in the art. In principle, any method and any order of mixing is possible. However, it may be preferred to use a two-step mixing, wherein all non-reactive ingredients, including lignocellulosic powder are added and mixed in the first step, and the reactive ingredients, including the curing additive, are added as the last component, in a second mixing step, involving lower temperatures.

As already mentioned, if oil is used in the composition, it is convenient to incorporate the lignocellulosic powder into to this oil, and adding this mixture to the other ingredients.

After obtaining a homogeneous compound comprising the desired ingredients, the compound is cured in a manner well known for a person skilled in the art, thereby obtaining an EPDM elastomer product.

Accordingly, the invention also relates to an EPDM elastomer product, obtained from the EPDM-based elastomer composition according to the invention. The products according to the invention are well suited for applications with working temperatures below 150°C. Some examples of such products include a fluid media carrier for vehicles, gaskets, sealings, etc.

As to the achievable CO2e reduction, the following is noted. The CO2e reduction results from using less carbon black and not burning the straw waste, which is still a commonly used method of disposal in agricultural settings. Therefore, if we take the substitution of carbon black with lignocellulosic powder as a reference, we can have a potential CO2e reduction of about 3.5t/t substituted carbon black, since the carbon black has a CO2e emissions of around 2.5t/t and burning of waste wheat straw has a CO2e emissions of around 1t/t. The exact values could vary from region, season, type of crop.

In the following, the invention is described in more detail by experiments and examples.

### A. Preparation of the straw powder:

For the specific examples, the lignocellulosic powder was sourced from field dried wheat straw originating from Romania. Processing the wheat straw has been done with a two-step milling, first step was done by using a knife mill, followed by ball milling, and sieving to obtain a particle size of between 1 µm and 100 µm. The moisture content of the straw before grinding was about 7%. There has been no additional thermal or chemical modification (e.g. no drying, no calcination).

### B. Preparation of elastomer comprising straw powder as filer:

The compound was mixed in a 2 step mixing process on an internal mixer and an open mill where, in the process, the straw powder was incorporated in the compound.

After mixing, the compound was cured in a press to vulcanize 2mm and 6mm sheet material for the experiments to assess mechanical properties (6mm plates are used for hardness testing and compression set, 2mm plates are used for the rest of the tests). This was done at 180°C for 20 min for the 2mm sheets and for 30 min for the 6mm sheets.

The reference EPDM compound for the outer hose layer consists of 100phr EPDM, 90 phr of carbon black (N784), 40 phr oil and 20 phr of curing and processing additives. The compound is peroxide cured.

The used carbon black has an Oil Absorption number (ASTM D2414) of 120 ml/100g, a Compressed Oil Absorption Number (ASTM D3493) of 80 ml/100g and an External Surface Area (ASTM D6556) of 28 m²/g.

In the EPDM compound according to the invention, a part of the carbon black was replaced by the straw powder prepared according to the above preparation process A).

The composition of the compounds under study are summarized in Table 1.

**Table 1: Composition of Compounds**

| | Reference | Example 1 |
|---|---|---|
| Ingredient | phr | phr |
| EPDM | 100 | 100 |
| Carbon black | 90 | 80 |
| Oil | 40 | 40 |
| Curing and processing additives | 20 | 20 |
| Straw | 0 | 10 |

The mechanical values of the vulcanized sheets (Reference and Example 1) are shown in table 2. The used standard methods are also indicated in the table. The straw modified sheet prepared according to Example 1 shows comparable hardness (63 vs 66), whereas the change in hardness after 168 hours at 160°C hot air aging shows a slightly higher increase in hardness (+6 vs +1). The initial tensile strength and the tensile strength after hot air aging (168 hours at 160°C) are only a bit lower and on a comparable level (13,6 N/mm² vs 13,5 N/mm² for the initial values and 14,8 N/mm² vs 13,4 N/mm² for the aged material). The elongation at break shows higher values for the initial values and for the values after heat aging (initial 332% vs 431% and 313% vs 350% for the aged material).

**Table 2: Sheet results**

| Material | Reference | Example 1 |
|---|---|---|
| Test | | |
| Shore A Hardness (DIN ISO 48-4) [SHE] | 66 | 63 |
| Change in Shore A after 168h at 160°C (DIN ISO 48-4) [SHE] | +1 | +6 |
| Tensile strength (DIN 53504) [N/mm²] | 13,6 | 13,5 |
| Tensile strength after 168h at 160°C (DIN 53504) [N/mm²] | 14,8 | 13,4 |
| Elongation at break (DIN 53504) [%] | 332 | 431 |
| Elongation at break after 168h at 160°C (DIN 53504) [%] | 313 | 350 |

From the above data, it is apparent to the skilled person that the EPDM-based elastomer compositions according to the invention result in EPDM-based products that can be used as automotive components, such as fluid media carriers, in particular as their outer layer, and present lower environmental impact than state-of-the-art components, while having the required mechanical properties.

## Claims

1. An EPDM-based elastomer composition comprising:
- an EPDM elastomer, and
- a filler comprising lignocellulosic powder from agricultural waste, wherein the lignocellulosic powder is present in an amount of at least 1 phr.

2. The elastomer composition according to claim 1, wherein the lignocellulosic powder is present in an amount of 1 to 120 phr.

3. The elastomer composition according to claim 1 or 2, wherein the lignocellulosic powder has a particle size between 1 µm and 250 µm.

4. The elastomer composition according to any one of claims 1 to 3, wherein the lignocellulosic powder has a moisture content of at most 10%.

5. The elastomer composition according to any one of claims 1 to 4, wherein the lignocellulosic powder is obtained from at least one of cereal straw, corn straw, rapeseed straw, rice straw, olive waste, palm tree waste, and bamboo.

6. The elastomer composition according to claim 5, wherein the lignocellulosic powder is obtained from wheat straw.

7. The elastomer composition according to any one of claims 1 to 6, wherein the lignocellulosic powder is obtained by a two-step milling process using a knife mill and a ball mill.

8. The elastomer composition according to claim 1 to 7, wherein the filler comprises lignocellulosic powder and carbon black.

9. The elastomer composition according to claim 8, wherein the carbon black is present in an amount of 20 to 150 phr.

10. The elastomer composition according to any one of claims 8 to 9, comprising lignocellulosic powder in an amount of 5 to 50 phr and carbon black in an amount of 50 to 90 phr.

11. The elastomer composition according to any one of claims 1 to 10, further comprising curing and processing additives in an amount between 3 and 30 phr.

12. The elastomer composition according to any one of claims 1 to 11, further comprising an oil in an amount between 10 and 80 phr.

13. EPDM elastomer product, obtained from the EPDM-based elastomer composition according to any of claims 1 to 12.

14. The EPDM elastomer product according to claim 13, wherein the EPDM elastomer product is a product used in vehicles, e.g. it is a fluid media carrier, gasket or sealing used in vehicles.
